## Europäisches Patentamt
## European Patent Office
## Office européen des brevets

(19)

(11) Veröffentlichungsnummer: **0 157 805**
**B1**

(12)

# EUROPÄISCHE PATENTSCHRIFT

(45) Veröffentlichungstag der Patentschrift:
02.08.89

(51) Int. Cl.⁴: **C 22 B 1/00**

(21) Anmeldenummer: **84903430.1**

(22) Anmeldetag: **06.09.84**

(86) Internationale Anmeldenummer:
**PCT/DE 84/00183**

(87) Internationale Veröffentlichungsnummer:
**WO 85/01069 (14.03.85 Gazette 85/07)**

(54) **VERFAHREN, ANLAGE UND/ODER VORRICHTUNG ZUM AUFBEREITEN VON VERÖLTEM HAUFWERK OD. DGL. MATERIALIEN.**

(30) Priorität: **08.09.83 DE 8325846 U**
**18.06.84 DE 3422545**

(73) Patentinhaber: **von Bormann, Georg, Gemsenstrasse 22, D-4044 Kaarst (DE)**

(43) Veröffentlichungstag der Anmeldung:
**16.10.85 Patentblatt 85/42**

(72) Erfinder: **von Bormann, Georg, Gemsenstrasse 22, D-4044 Kaarst (DE)**

(45) Bekanntmachung des Hinweises auf die Patenterteilung:
**02.08.89 Patentblatt 89/31**

(74) Vertreter: **Hiebsch, Gerhard F., Dipl.- Ing., Erzbergerstrasse 5A Postfach 464, D-7700 Singen 1 (DE)**

(84) Benannte Vertragsstaaten:
**BE CH DE LI LU NL**

(56) Entgegenhaltungen:
**EP-A-0 080 589**
**DE-A-3 043 220**
**GB-A-2 012 815**
**US-A-3 163 929**
**US-A-3 484 289**
**US-A-3 997 359**
**US-A-4 075 370**
**US-A-4 091 826**
**US-A-4 168 714**
**US-A-4 336 136**
**US-A-4 392 944**

LIBER, STOCKHOLM 1989

2

## Beschreibung

Die Erfindung betrifft ein Verfahren zum Aufbereiten von veröltem Haufwerk, Walzenzunder od. dgl. Materialien, das als Waschgut bei industriellen Prozessen anfällt wie Walzenzunder.

Zum Kühlen von großen, schnellaufenden Walzengerüsten werden deren Walzen mit emulgierten Schmier- und Kühlmitteln überflutet. Das Öl gelangt in den während des Walzvorganges entstehenden Walzenzunder, der - bis zu etwa 20 % mit Ölanteil belastet - nicht mehr einsetzbar ist.

Durch die unvollkommene Verbrennung des Öles verkleben die Tuchfilter und die Elektrofilter werden durch die entstehenden Kantenstoffbrücken kurzgeschlossen, was zu Filterbränden bzw. zu Filterexplosionen führt.

Aus den genannten Gründen muß der Walzenzunder vor seinem Einsatz entölt werden, wozu es nach dem Stand der Technik die folgenden Methoden gibt.

Man verschmischt den verölten Walzenzunder so mit unveröltem Walzenzunder, daß der Gesamtanteil an Öl unter das schädliche Maß absinkt. Da eine echte Durchmischung von ölhaltigem mit nicht ölhaltigem Zunder technisch kaum darstellbar ist, kommt es bei diesem Verfahren immer wieder zu Ölnestern und damit zu den oben bereits geschilderten Mängeln.

Der ölhaltige Walzenzunder kann auch u. a. in eine nachgeschaltete Koksbatterie gegeben werden. Durch die Anwesenheit von Eisen wird die sich bildende Schwefelsäure derart aggressiv, daß die mit ihr in Berührung kommenden Rohrsysteme kurzfristig zerfressen werden. Dies fuhrt dazu, daß Hersteller von Kokereianlagen dann jegliche Garantie für letztere ablehnen, wenn der Einsatz von veröltem Walzenzunder vorgesehen ist.

Probleme ergaben sich auch beim Reinigen von Metallspänen, insbesondere von Aluminiumspänen, die z. B. während eines spanabhebenden Formverfahrens mit Maschinenöl, ölhaltigem Kühlmittel od. dgl. benetzt worden sind. Es ist bekannt, Metallspäne in einer Flüssigkeit zu waschen. Wäscht man etwa Aluminiumspäne in einer Lauge, wird durch Reaktion $H_2$ frei, wobei eine große Menge von Schaum entsteht und sich Knallgas bildet.

Angesichts dieser Gegebenheiten hat sich der Erfinder das Ziel gesetzt, ein Verfahren der eingangs erwähnten Art so zu gestalten, daß ein Entölen des Industriellen Waschgutes, insbesondere des Walzenzunders, möglich wird. Dieses Verfahren und die dafür geschaffene Anlage und/oder Vorrichtungen sollen auch für die Behandlung verölter Aluminiumspäne od. dgl. anzuwenden sein.

Zur Lösung dieser Aufgabe führt eine Lehre nach dem kennzeichnenden Teil des Anspruches 1. Besondere Weiterbildungen der Erfindung sind in den Unteransprüchen gekennzeichnet.

Bevorzugt wird etwa der Walzenzunder oder das entsprechende Waschgut - mehr oder minder in schlammartiger Konsistenz - in eine Waschtrommel eingeleitet und dort in einer mit 2 % Ätznatron versetzten Waschlauge bei etwa 50 C - und höherer Temperatur - gewaschen.

Bei einem besonderen Verfahren nach der Erfindung sind der an der Innenfläche der geschlossenen Trommelwandung geneigte Lamellen angeordnet, von denen mehrere auf einer Schraubenlinie verlaufen, also eine Wendel bilden. Erfindungsgemäß sind diese Lamellen in zwei Ebenen geneigt, wobei die Größe der beiden Neigungswinkel vom Rutschverhalten des eingesetzten Materials und von der gewünschten Steigung dieser Wendel abhängt. Die Vorgabe ist eine solche Neigung, daß die zu reinigenden Metallspäne vor dem Anheben über den Spiegel der Waschlauge von der Lamelle herunter gleiten und von der darunterliegenden Lamelle aufgefangen werden. Dieses Waschen unterhalb des Laugenspiegels ist nur bei starkoxidierenden Materialien erforderlich - andernfalls kann auch ein Anheben über den Laugenspiegel erfolgen.

Man wäscht erfindungsgemäß in der Waschtrommel bei einer höheren Temperatur; niedrigere Temperaturen führen zu erheblich schlechterer Entölung.

Die aus der Waschtrommel ausgetragene, mit Öl befrachtete Waschlauge wird vorteilhafterweise in einem Dekanter geführt und mittels eines Separators entölt. Anschließend leitet man die Lauge über einen Wärmetauscher und/oder einen Verdampfer - unter Erzeugung destillierten Wassers - in die Waschtrommel zurück.

Als günstig hat es sich erwiesen, diese Vorgänge zumindest einmal zu wiederholen. Hierzu stehen die nachfolgenden Versuchsergebnisse mit veröltem Walzenzunder zur Verfügung:

1. Bei einmaligem Waschen: Absenken des Ölgehaltes von 20 % auf 0,23 %;
2. bei zweimaligem Waschen: Absenken des Ölgehaltes von 20 % öl auf 0,15 %.

Da im allgemeinen ein Ölgehalt von weniger als 0,5 % gefordert wird, reichen die erzielten Versuchsergebnisse völlig aus, um einen wiedereinsetzbaren Zunder anbieten zu können.

Erfindungsgemäß wird nach dem zweiten Waschvorgang das entölte Waschgut entwässert, bevorzugt auf einer Kammerfilterpresse abgepreßt, und anschließend mit klarem Wasser ein Flüssigkeitsaustausch durchgeführt, um die gelösten Alkalien voll zu verdrängen. Die Analysenvorschrift hierzu lautet:

Summe der Alkalien < 0,3 %.

Dank dieses Verfahrens ist der Walzenzunder wieder vollkommen einsatzfähig.

Einen Teil des feinen Walzenzunders wird allerdings mit der Lauge ausgetragen und erst im Dekanter von der Lauge getrennt.

Man erhält mit dem Dekanter einen schlammartigen Niederschlag. Dieser Schlamm wird vorteilhafterweise in Lauge eingerührt, also in einem Rührwerk behandelt und gleichzeitig das aufgerührte Gut mit Luft durchblasen. Hierzu ist nach einem weiteren Merkmal der Erfindung eine Rührwerksbehälter am Boden mit Düsen bestückt, die wahlweise mit Lauge bzw. mit Luft beaufschlagt werden können.

Nach dem Erreichen eines gewissen Füllgrades kann die Schlammzufuhr zum Rührwerksbehalter unterbrochen und das Rührwerk abgeschaltet werden. Die Luftbegasung wird erfindungsgemäß aufrechterhalten, so daß mit den aufsteigenden Luftblasen das Öl mitgerissen wird - es findet eine beschleunigte Entölung statt. Nach einiger Zeit wird die Luftzufuhr ebenfalls abgestellt und das Öl von der Oberfläche abgesaugt.

Am Boden des Rührwerkbehälters abgelagerter Schlamm wird mittels des Rührwerks erneut aufgewirbelt, bis kein Öl mehr aufsteigt. Die Aufwirbelung des Schlammes erfolgt zum Herabsetzen des Anfahrmomentes des Rührwerkes. Das aufgestiegene Öl wird erneut abgesaugt. Dieser Vorgang wird je nach dem Ölgehalt gesteuert.

Ist der Austrag aus dem Dekanter weitgehend entölt, wird er - zusammen mit dem Waschgut aus der Waschtrommel - erfindungsgemäß entwässert.

Das erfindungsgemäße Verfahren und eine dafür geeignete Anlage sind - außer für Walzenzunder - vor allem auch zum Entölen von Metallspänen oder Dolomit geeignet, ebenso zum Entölen von Enden.

Zum Stand der Technik gehört eine Anlage nach der GB-A-2 012 815, bei der eine Beschichtung, beispielsweise eine Metallauflage, von geschredderten, zerkleinerten, verzinnten Buchsen abgeschält werden soll. Zu diesem Zweck ist eine Trommel um eine schräge Achse rotierbar angeordnet und wälzt die Teile um, während die Trommel in der einen Richtung rotiert. Bei Rotation in der Gegenrichtung werden die Teile ausgetragen. Es ist ein Fluid-Einlaß und ein Fluid-Auslaß für ein flüssiges Schälmittel vorhanden. Ein elektrochemisches Element ist zur Rückgewinnung des Beschichtungsmaterials mittels galvanischem Niederschlag mit dem Fluid-Auslaß verbunden. Im Innern der Trommel sind Hebeschaufeln angeordnet.

Außerdem gehört zum Stand der Technik eine Anlage nach der US-A-4 336 136, bei der Erdreich, das durch schweres Rohöl, raffiniertes Erdöl und/oder chemische Produkte, die aus ähnlichen Quellen stammen, verschmutzt ist, wieder aufbereitet werden soll. Dazu ergibt sich die Notwendigkeit auf Grund gestiegener Ölkosten und strenger behördlicher Auflagen betreffend der Entsorgung von Verschmutzungen. Zu diesem Zweck ist ein Mischer vorgesehen, der das Erdreich mit einer Flüssigkeit erhitzt und eine erhitzte Mischschlämme erzeugt.

Die Schlämme wird dann mehrfach behandelt, um eine Abscheidung der Ölpartikel von den feinen Schlämmpartikeln zu erreichen. Unter anderem wird auch eine Darre in Form einer Trommel eingesetzt, die in ihrem Innern sowohl Dampfrohre hat, die die Schlämme besprengen, als auch gegeneinander versetzte Ablenkbleche, die von der Trommelinnenwand nach innen ragen.

Die Erfindung wird in der nachfolgenden Beschreibung eines bevorzugten Ausführungsbeispiels sowie anhand der Zeichnung näher erläutert; diese zeigt in

Fig. 1 den teilweisen Längsschnitt durch eine Waschtrommel mit Trommelmantel und Stirnwänden;

Fig. 2 einen Querschnitt durch die Waschtrommel;

Fig. 3 eine skizzierte Darstellung eines Mantelausschnittes der Waschtrommel;

Fig. 4 einen vergrößerten Schnitt durch die Trommelwand;

Fig. 5 die vergroßerte Draufsicht auf eine Stirnwand der Waschtrommel und

Fig. 6 ein Verfahrensschema zu einem Reinigungsvorgang.

Eine Waschtrommel 1 eines Durchmessers d von im gewählten Beispiel 150 cm und einer Länge n von 500 cm weist in einer die zylindrische Trommelwand 2 verschliessenen Stirnwand 3 eine Aufgabeeinrichtung 4 für Waschgut S in Form von veröltem Walzenzunder auf. Der Durchmesser e der Aufgabeeinrichtung 4 beträgt etwa 60 cm, wohingegen der Durchmesser t eines in der gegenüberliegenden Stirnwand 5 vorgesehenen Einlaufes 6 für eine Waschlauge L etwa 30 cm beträgt.

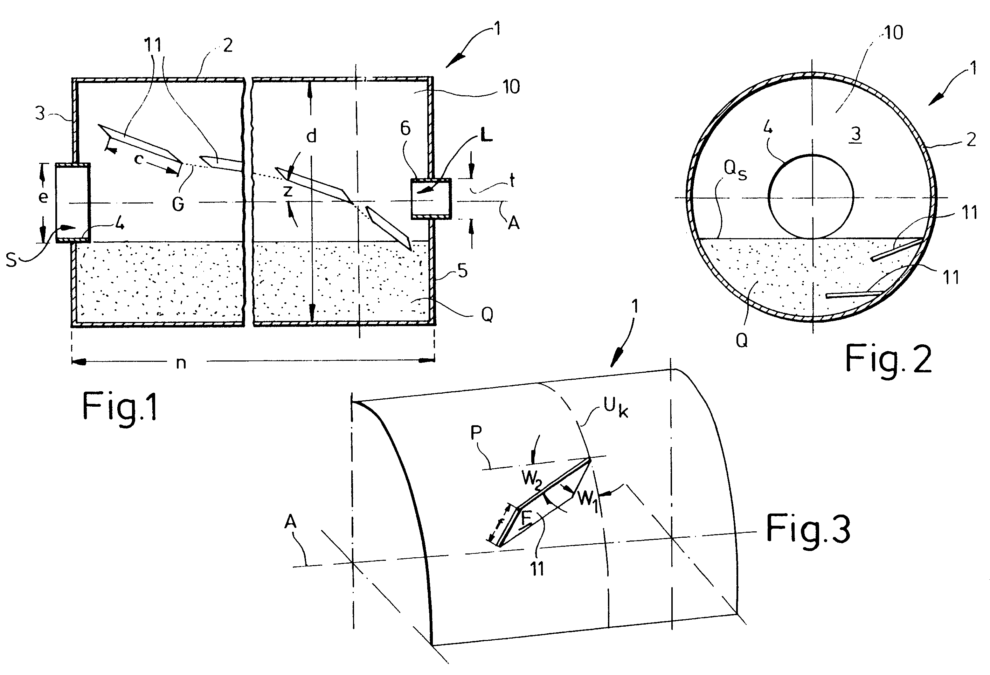

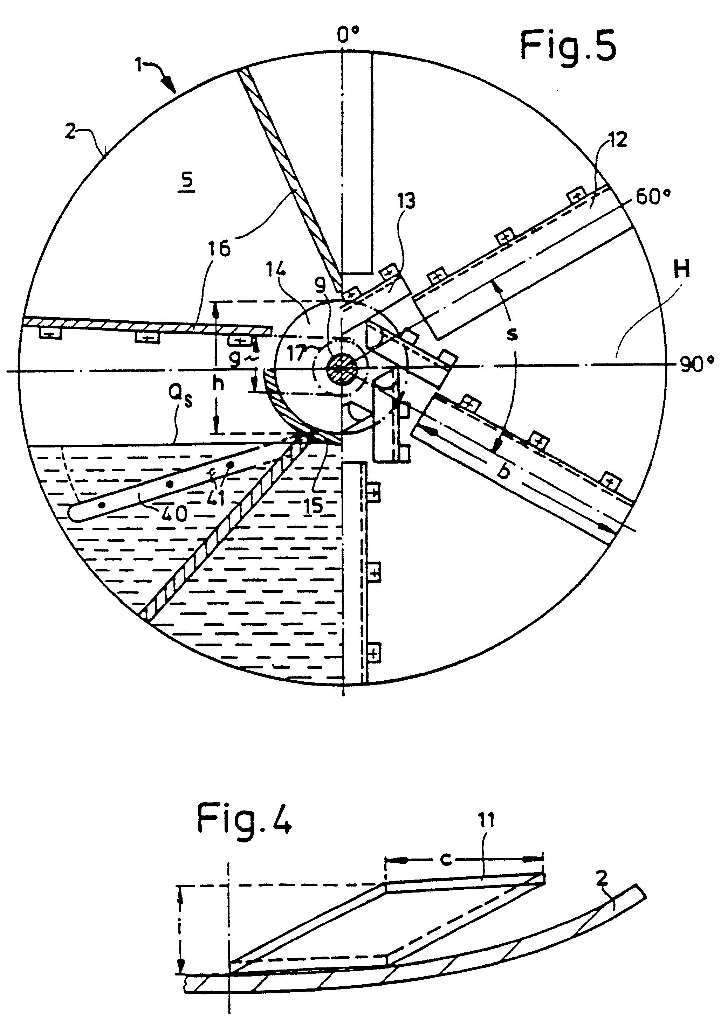

Im Trommelinnenraum 10 sind Lamellen 11 vorgesehen, deren Fläche F einerseits zu einer Umfangskontur $U_k$ und anderseits zu einer Trommelachse A parallel verlaufenden Wandlinie P einen Neigungswinkel $w_1$ bzw. $w_2$ einschließt (Fig. 3). Die Länge C der Lamellen 11 mißt etwa 150 mm, ihre Breite f dann 80 mm. Fig. 4 verdeutlicht die Projektionshöhe i (z. B. 40 mm).

Wie in Fig. 1 angedeutet, bestimmen mehrere Lamellen 11 auf einer gedachten Linie eine Schraubenlinie G, bilden also eine zusammengesetzte Wendel. Von den Lamellen 11 sind in der Zeichnung aus Gründen der Übersichtlichkeit nur einige dargestellt - jedoch sind mehrere Wendel in der Waschtrommel 1 vorhanden.

Auch ist zur Vereinfachung der Zeichnung nicht gezeigt, daß die Lamellen 11 bezüglich der Winkel $W_1$ und $W_2$ verstellbar sind, um die Form jener Wendel dem jeweiligen Waschgut anpassen zu können.

Die Waschtrommel 1 dient zum Reinigen von veröltem Haufwerk, wie mit Öl versehenem Walzenzunder oder von Aluminiumspänen, deren Ölfilm auf der Oberfläche des Metalls in der Lauge L ausgewaschen wird. In der Zeichnung ist die das Waschgut S enthaltene Lauge L mit Q bezeichnet. Die in zwei Ebenen geneigten Lamellen 11 nehmen die im Unterteil der sich drehenden Waschtrommel 1 liegenden Aluminiumspäne d. h. das Waschgut S auf und heben dieses auf der Fläche F an. Bevorzugt sind die Lamellen 11 so angebracht, daß ein Teil des von ihnen erfaßten Waschgutes auf seinem Förderweg zur darunter liegenden - also vorgeschalteten - Lamelle 11 zurückfällt, wodurch der Förderweg verlängert wird.

Handelt es sich um nur wenig oxidierendes Material, so kann das Waschgut S über dem Laugenspiegel $Q_s$ angehoben werden, und es fällt in Abhängigkeit von der Neigung der Fläche F auf die darunterliegende nächste Wendel. Bei stark oxidierenden Materialien sollte die Übergabe von einer Lamelle 11 auf die darunter folgende unterhalb des Laugenspiegels $Q_s$ durchgeführt werden. Die Neigungswinkel $w_1$ bzw. $w_2$ sind in ihrem Maße abhängig zum einen vom Schuttwinkel des zu reinigenden Waschgutes S und zum anderen vom Steigungswinkel z der Wendel. Deren Steigung wiederum ist von der Länge n der Waschtrommel 1 und deren Umdrehungszahl abhängig und zwar unter Berücksichtigung der zum Reinigen erforderlichen Verweilzeit des Waschgutes L in der Lauge Q. Von Bedeutung ist zudem auch der Füllgrad der Waschtrommel 1.

Die Größe der Fläche F der Lamelle 11 beträgt im gewähltem Ausführungsbeispiel 15 cm x 8 cm x 5 cm, in der Zeichnung sind die Lamellen 11 überhöht dargestellt.

Gemäß der auf der rechten Seite der Fig. 5 gezeigten Ausführungsform sind an der Austragsstirnwand 5 radial und mit Zwischenwinkeln s von 60° Zuführstege 12 einer Länge b von z. B. 500 mm angeordnet, an welche zur Austragsöffnung 14 hin Schuhrinnen 13 anschließen.

In der linken Hälfte von Fig. 5 findet sich eine besonders bevorzugte Ausführung mit einer Austragsrinne 15 und Austragsstegen 16, die Tangenten zu einem Konstruktionskreis 17 bilden; dessen Durchmesser g liegt zwischen dem Durchmesser h der Austragsöffnung 14 und dem Durchmesser der Trommelachse 9. Dank dieser Maßgabe gleitet aufgenommenes Waschgut S erst oberhalb der Horizontgeraden H vom Austragssteg 16 ab.

Unterhalb des Laugenspiegels $Q_s$ ist symbolisch ein Düsenstock 40 eingezeichnet, aus dessen Bohrungen 41 die Waschlauge gegen die Stirnwand 5 gesprüht wird. Dank des Druckes der zugeführten Waschlauge wird in der bereits vorhandenen Waschlauge an deren Spiegel $Q_s$ eine von Rückständen freie Zone erzeugt, durch die das Waschgut S störungsfrei hindurchgehoben werden kann.

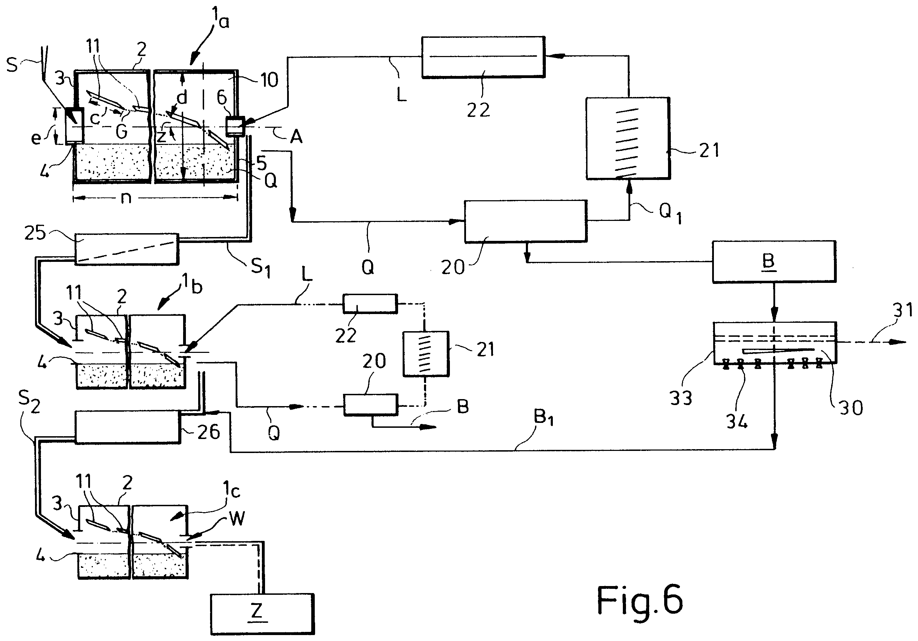

Die alkalische Waschlauge Q weist vor allem Silikate und nichtionogene Tenside auf und wird gemäß Fig. 6 aus einer ersten Waschtrommel $1_a$ zu einem Dekanter 20 geführt, dessen Überlauf $Q_1$ in einen Separator 21 gelangt und von dort durch einen Wärmetauscher 22 als Lauge L zur Waschtrommel $1_a$ zurückgeführt wird. Statt des Wärmetauschers 22 oder zusätzlich kann eine in der Zeichnung vernachlässigte Verdampfungsstation vorgesehen werden.

Die Umdrehungszahl des Dekanters 20 wird erfindungsgemäß so gewählt, daß die Adhäsion des Öls am Waschgut 5 - also an der Oberfläche des Walzenzunders - größer ist als die Zentrifugalkraft, so daß das Öl großteils mit dem Feststoff als Dekanterniederschlag B ausgetragen wird.

Das Waschgut $S_1$ wird nach der ersten Waschtrommel $1_a$ über eine Entwässerungsrinne 25 zu einer zweiten Waschtrommel $1_b$ geführt, die ihrerseits an einen Laugenkreislauf angeschlossen ist, wie er zur Waschtrommel $1_a$ beschrieben wurde.

Das Waschgut $S_2$ durchläuft nach der Waschtrommel $1_b$ wiederum eine Entwässerungsrinne 25 - oder eine Kammerfilterpresse 26 - und gelangt dann in eine mit klarem Wasser betriebene Waschtrommel $1_c$. Mit diesem klaren Wasser wird ein Flüssigkeitsaustausch durchgeführt, so daß aus der Waschtrommel $1_c$ gereinigtes Produkt Z austritt.

Vor der Waschtrommel $1_c$ wird in das Waschgut ein schlammartiges Gut $B_1$ eingelegt; dieses ist der Rückstand aus dem Dekanterniederschlag B, der in einem Rührwerk 30 weitestgehend von dem am Ölabzug 31 abgezogenen Öl befreit worden ist.

Im Behälter 33 des Rührwerkes 30 sind im Bodenbereich Luftdüsen 34 vorgesehen, die wahlweise mit Waschlauge oder Luft beaufschlagt werden.

Wird das Rührwerk abgestellt und die Zufuhr an Dekanterniederschlag B aus dem Dekanter 20 unterbrochen, reißen die aufsteigenden Luftblasen das Öl mit, was eine rasche Entölung ermöglicht.

Nach einiger Zeit wird die Luftzufuhr über die Luftdüsen 34 ebenfalls unterbrochen, so daß das Öl von der im Behälter 33 stehenden Suspensionsoberfläche abgezogen werden kann.

Der am Boden des Behälters 33 abgelagerter Schlamm wird mittels des Rührwerks 30 erneut aufgewirbelt. Ist das Rührwerk 30 in Betrieb, wird die Laugenzufuhr abgestellt und wieder Luft eingeblasen. Das aufgestiegene Öl wird wiederum abgesaugt. Dieser Vorgang wird je nach dem Ölgehalt gesteuert. Ist der hier aufzubereitende Dekanterniederschlag B weitgehend entölt, wird er zusammen mit dem Waschgut S aus der zweiten Waschtrommel $1_b$ einer Kammerfilterpresse 26 aufgegeben.

Das am Ölabzug 31 gewonnene Öl wird so aufbereitet, daß es wieder verkauft werden kann. Im wesentlichen ist dies eine Trennung des Öls von Restlauge und Schwebstoffen.

## Patentansprüche

1. Verfahren zum Aufbereiten von veröltem Haufwerk, Walzenzunder od. dgl. Materialien, das als Waschgut bei industriellen Prozessen anfällt,

dadurch gekennzeichnet,

daß das verölte Material in eine Waschtrommel eingeleitet und dort in einer bei 10 bis 14 pH eingestellten Waschlauge im Gegenstrom gewaschen sowie dabei dieses Waschgut an der Trommelwandung durch Tragflächen angehoben wird.

2. Verfahren nach Anspruch 1, dadurch gekennzeichnet, daß die Waschlauge bei 12 bis 14 pH eingestellt wird.

3. Verfahren nach Anspruch 1 oder 2, dadurch gekennzeichnet, daß die Waschlauge mit etwa 2 % Ätznatron versetzt und/oder daß bei etwa 50° C bzw. einer darüberliegenden Temperatur gewaschen wird.

4. Verfahren nach Anspruch 1 oder 2, dadurch gekennzeichnet, daß phosphat- und karbonfreie Waschlauge eingesetzt wird.

5. Verfahren nach einem der Ansprüche 1 bis 4, dadurch gekennzeichnet, daß während des Waschvorgangs oder vor einem Wiederholen des Waschvorgangs mit kieselsaurem Kalium oder Natriumsilikat aufgepuffert wird, bis es keine Reaktion mit der Lauge gibt.

6. Verfahren nach einem der Ansprüche 1 bis 5, dadurch gekennzeichnet, daß nach dem Wa- schvorgang oder dem wiederholenden Wa- schvorgang ein Flüssigkeitsaustausch mittels klaren Wassers erfolgt, und/oder daß das Wa- schgut zwischen den Waschvorgängen entwäs- sert wird.

7. Verfahren nach einem der Anprüche 1 bis 6, dadurch gekennzeichnet, daß die Lauge hinter der Waschtrommel über einen Dekanter geführt und ein Teil der feinen Schwebstoffe von der Lauge getrennt wird, die anschließend einem Separator, vor der Rückführung zur Waschtrommel, zur Entölung zugeführt wird, und daß andererseits aus dem Dekanter Öl mit dem Teststoff als Dekanterniederschlag ausgetragen wird.

8. Verfahren nach Anspruch 7, dadurch gekennzeichnet, daß die Lauge vor der Rückführung zur Waschtrommel auf ihre ursprüngliche Konzentration eingestellt und auf Waschtemperatur geführt wird, wobei sie bevorzugt einen Wärmetauscher und/oder einen Verdampfer durchläuft.

9. Verfahren nach einem der Ansprüche 7 oder 8, dadurch gekennzeichnet, daß der Dekanterniederschlag in Lauge eingerührt wird.

10. Verfahren nach einem der Ansprüche 7 bis 9, dadurch gekennzeichnet, daß der Dekanterniederschlag nach seiner Entölung mit dem aus der Waschtrommel ausgetragenen Waschgut entwässert wird.

11. Verfahren nach einem der Ansprüche 7 bis 10, dadurch gekennzeichnet, daß der Dekanterniederschlag einem Rührwerk zugefürt wird, dessen Behälter (33) bodenwärts mit Luftdüsen versehen ist, die wahlweise mit Waschlauge oder Luft beaufschlagt werden, daß das Öl von der im Behälter stehenden Suspensionsoberfläche abgezogen wird, und daß der am Boden des Rührwerkbehälters abgelagerte Schlamm erneut aufgewirbelt wird.

12. Verfahren nach einem der vorhergehenden Ansprüche, dadurch gekennzeichnet, daß bei Verwendung von drei Waschtrommeln die Waschlauge aus der ersten Waschtrommel ausgetragen und einem Dekanter zugefürt wird, von welchem einerseits der Laugenüberlauf zur Entölung einem Separator zugeführt und an- schließend zur ersten Waschtrommel zurück- geführt wird, und von welchem andererseits der Dekanterniederschlag einem Rührwerk zugeführt wird, daß das aus der ersten Waschtrommel ausgetragene Waschgut über eine Entwässerungsrinne der zweiten Waschtrommel zugeführt wird, die ihrerseits an einen ähnlichen Laugenkreislauf wie die erste Waschtrommel angeschlossen ist, daß der Austrag des Rührwerks zusammen mit dem aus der zweiten Wa- schtrommel ausgetragenen Waschgut einer Kam- merfilterpresse oder einer Entwässungsrinne und anschließend der dritten Waschtrommel zugeführt wird, die mit klarem Wasser betrieben wird, und aus der das gereinigte Waschgut ausgetragen wird.

13. Verfahren nach einem der Ansprüche 1 bis 12, dadurch gekennzeichnet, daß die Tragflächen an der Trommelwandung, durch die das Waschgut angehoben wird, an der Innenfläche der Trommelwandung geneigt angeordnete Lamellen sind, von denen mehrere auf einer Schraubenlinie verlaufen, und daß bevorzugt die Fläche der Lamelle einerseits mit einer Umfangskontur der Trommelwandung (2) und andererseits mit einer in der Trommelwandung verlaufenden Parallelen zur Trommelachse Neigungswinkel einschließt.

14. Verfahren nach Anspruch 13, dadurch gekennzeichnet, daß zumindest einer der Nei- gungswinkel ($w_1$, $w_2$) etwa 30° beträgt und/oder daß die Neigungswinkel ($w_1$, $w_2$) der Lamellen in der Waschtrommel verstellbar sind.

15. Verfahren nach einem der Ansprüche 1 bis 14, dadurch gekennzeichnet, daß das Waschgut an der Trommelwandung durch zusätzliche Stege (12, 16) angehoben wird, die der Austragsstirnwand der Waschtrommel zugeordnet sind, die oberhalb des tiefsten Randpunktes der Austragsöffnung (14) zu dieser geneigt verlaufen, und die gegebenenfalls Tangeten an einem um die Trommelachse gelegten Konstruktionskreis (17) sind, dessen Durchmesser (2) größer als jener der Trommelwelle und kleiner als jener der Austragsöffnung (14) ist (Fig. 5, links).

16. Verfahren nach einem der vorhergehenden Ansprüche, insbesonders nach Anspruch 15, dadurch gekennzeichnet, daß der Strahl wenigstens einer Laugenzuführung (40) der Waschtrommel gegen deren Austragsstirnwand (5) gerichtet wird, der bevorzugt unterhalb des Laugenspiegels ($Q_s$) an der Wellenseite mit aufwärts drehenden Stegen (16) zugeführt wird.

**Revendications**

I. Procédé pour le traitement de déblais salis par d'huile, battitures ou de matériaux semblables qui est produit lors du processus indu- striels en tant que lavée

caractérisé en ce que

le matériel sali par d'huile est envoyé dans un tambour laveur où il est lavé à contre-courant dans une lessive de 10 à 14 pH, cette lavée étant en même temps soulevée à la paroi du tambour par des surfaces d'appui.

2. Procédé selon la revendication 1 caractérisé en ce que la lessive est ajustée de 12 à 14 pH.

3. Procédé selon la revendication 1 ou 2 caractérisé en ce que la lessive est mélangée avec environ 2 % de soude caustique et/ou que le lavage se fait à environ 50°C ou à une température plus élevée.

4. Procédé selon la revendication 1 ou 2 caractérisé en ce que est utilisée une lessive sans phosphate et sans carbone.

5. Procédé selon une des revendications 1 à 4 caractérisé en ce que lors du lavage ou avant la répétition du lavage se fait un tamponnage avec potassium silicié ou avec silicate de sodium jusqu'à ce qu'il n'y a pas de réaction avec la lessive.

6. Procédé selon une des revendications 1 à 5 caractérisé en ce que après le lavage ou la répétition du lavage est fait une diffusion de liquides avec de l'eau pure et/ou que la lavée est déshydratée entre les procédés de lavage.

7. Procédé selon une des revendications 1 à 6 caractérisé en ce que la lessive est amenée derrière le tambour à travers d'un appareil à décanter et que une partie des matières en suspension fines est séparée de la lessive qui ensuite est amenée - avant le retour dans le tambour - à un séparateur pour être déshuilée et que d'autre côté de l'appareil à décanter sort de l'huile avec le matériel d'essai comme dépôt décanter.

8. Procédé selon la revendication 7 caractérisé en ce que avant le retour au tambour la lessive est ajustée à sa concentration initiale et mise sur la température de lavage en traversant de préférence un échangeur thermique et/ou un vaporisateur.

9. Procédé selon une des revendications 7 ou 8 caractérisé en ce que le dépôt décanter est délayer dans de la lessive.

10. Procédé selon une des revendications 7 à 9 caractérisé en ce que après être déshuilé le dépôt décanter est déshydraté avec la lavée sortie du tambour.

11. Procédé selon une des revendications 7 à 10 caractérisé en ce que le dépôt décanter est amené à un mélangeur dont le récipient (33) possède vers le fond des buses d'air qui sont injectées en option avec de la lessive ou de l'air, que l'huile est décantée de la surface de suspension dans le récipient et que la boue déposée au fond du récipient du mélangeur est de nouveau soulevée en tourbillons.

12. Procédé selon une des revendications précédentes caractérisé en ce que lors de l'utilisation de trois tambours la lessive est sortie du premier tambour et amenée à un appareil à décanter duquel d'un côté la surverse de la lessive est amenée à un séparateur pour être déshuilée et ensuite retournée dans le premier tambour et du quel d'autre côté le dépôt décanter est amené à un mélangeur, que la lavée sortie du premier tambour est amenée au deuxième tambour par l'intermédiaire d'une tranchée d'eau, ce deuxième tambour étant raccordé de sa part à un circuit de lessive semblable à celui du premier tambour, que la décharge du mélangeur est amenée avec la lavée sortie du deuxième tambour à un filtre-presse à chambres, ou à une tranchée d'eau et ensuite au troisième tambour qui fonctionne avec de l'eau pure et duquel est sortie la lavée purifiée.

13. Procédé selon une des revendications 1 à 12 caractérisé en ce que les surfaces d'appui à la paroi de tambour par lesquelles la lavée est soulevée sont des lamelles placées de manière inclinée à la surface intérieure de la paroi du tambour dont plusieurs se trouvent sur une hélice et que de préférence la surface de la lamelle forme des angles d'inclinaison d'un côté avec le contour circonférentiel de la paroi du tambour (2) et d'autre côté avec une parallèle à l'axe du tambour dans la paroi du tambour.

14. Procédé selon la revendication 13 caractérisé en ce que au moins un des angles d'inclinaison ($w_1$, $w_2$) se monte à 30° et/ou que les angles d'inclinaison ($w_1$, $w_2$) des lamelles dans le tambour sont réglables.

15. Procédé selon une des revendications 1 à 14 caractérisé en ce que la lavée est soulevée à la paroi du tambour par des traverses supplémentaires (12, 16) qui sont attribuées à la paroi frontale de décharge du tambour qui se trouvent au-dessus du point marginal plus bas de l'ouverture de décharge (14) de manière inclinée vers celle-ci et qui sont le cas échéant, des tangentes à un cercle de construction (17) autour de l'axe du tambour dont le diamètre (g) est plus grand que celui de l'arbre de tambour et inférieur à celui de l'ouverture de décharge (14) (fig 5, à gauche).

16. Procédé selon une des revendications précédentes en particulier selon la revendication 15 caractérisé en ce que le jet d'au moins une amenée de lessive (40) dans le tambour est dirigé contre la paroi frontale de décharge (5) de celle-ci qui est amené de préférence au-dessous du niveau de la lessive ($Q_s$) au côté de l'arbre avec des traverses tournant en haut (16).

## Claims

1. A method of treating oil-fouled debris, roll scale or the like materials, which occurs as material to be washed in industrial processes, characterized in that the oil-fouled material is introduced into a washing drum and is washed therein in a washing lye which is set to a pH-value of 10 to 14 in counter-flow relationship and in that operation said material to be washed is lifted at the wall of the drum by support surfaces.

2. A method according to claim 1 characterised in that the washing lye is set to a pH-value of 12 to 14.

3. A method according to claim 1 or claim 2 characterized in that the washing lye is mixed with about 2 % caustic soda and/or that the washing operation is effected at about 50°C or a temperature above same.

4. A method according to claim 1 or claim 2 characterised by using phosphate-free and carbon-free washing lye.

5. A method according to one of claims 1 to 4 characterized in that during the washing operation or prior to a repetition of the washing operation, a buffering operation is effected with potassium silicate or sodium silicate until there is no reaction with the lye.

6. A method according to one of claims 1 to 5 characterized in that after the washing operation or the repeated washing operation, a liquid exchange operation is effected by means of clear water and/or that the material to be washed is dewatered between the washing operations.

7. A method according to one of claims 1 to 6 characterised in that downstream of the washing drum the lye is passed by way of a decanting apparatus and a part of the fine suspended matter is separated from the lye which is then passed to a separator, before being returned to the washing drum, to remove the oil therefrom, and that on the other hand oil with the test material is discharged from the decanting apparatus as a decanting deposit.

8. A method according to claim 7 characterized in that, before being returned to the washing drum, the lye is adjusted to its original concentration and is set to washing temperature, preferably passing through a heat exchanger and/or an evaporator.

9. A method according to one of claims 7 or 8 characterized in that the decanting deposit is stirred into lye.

10. A method according to one of claims 7 to 9 characterized in that the decanting deposit is dewatered after removal of the oil therefrom, with the washed material which is discharged from the washing drum.

11. A method according to one of claims 7 to 10 characterized in that the decanting deposit is passed to a stirrer, the container (33) of which is provided towards the bottom with air nozzles which are selectively fed with washing lye or air, that the oil is removed from the surface of the suspension in the container and that the slurry which is deposited at the bottom of the stirrer container is whirled up again.

12. A method according to one of the preceding claims characterized in that, when using three washing drums, the washing lye is discharged from the first washing drum and passed to a decanting apparatus from which on the one hand the lye overflow is passed to a separator for removal of the oil and is then returned to the first washing drum, and from which on the other hand the decanting deposit is passed to a stirrer, that the washed material discharged from the first washing drum is passed by way of a dewatering channel to the second washing drum which in turn is connected to a similar lye circuit to the first washing drum, that the discharge of the stirrer together with the washed material discharged from the second washing drum is fed to a charter filter press or a dewatering channel and then the third washing drum which is operated with clear water and from which the cleaned washed material is discharged.

13. A method according to one of claims 1 to 12 characterized in that the support surfaces at the wall of the drum which lift the material to be washed are plates which are arranged in an inclined position at the inside surface of the wall of the drum and of which a plurality extend on a helical line, and that preferably the surface of the plate includes angles of inclination on the one hand with respect to a peripheral contour of the wall (2) of the drum and on the other hand with a line extending in the wall of the drum parallel to the drum axis.

14. A method according to claim 13 characterized in that at least one of the angles of inclination ($w_1$, $w_2$) is about 30° and/or that the angles of inclination ($w_1$, $w_2$) of the plates in the washing drum are adjustable.

15. A method according to one of claims 1 to 14 characterized in that the material to be washed is lifted at the wall of the drum by additional web portions (12, 16) which are associated with the discharge end wall of the washing drum, which extend above the lowest point of the edge of the discharge opening (14) inclinedly with respect thereto and which are possibly tangents to a construction circle (17) around the axis of the drum, the diameter (g) of the circle (17) being larger than that of the drum shaft and smaller than that of the discharge opening (14) (Figure 5, left-hand side).

16. A method according to one of the preceding claims, in particular claim 15, characterized in that the jet of at least one lye feed means (40) is directed in the washing drum towards the discharge end wall (5) thereof, the jet preferably being supplied beneath the surface ($Q_s$) of the lye at the side of the shaft with upwardly rotating web portions (16).

Fig.1

Fig.2

Fig.3

EP 0 157 805 B1

Fig.5

0°

1

2

5

16

12

13

60°

14

9

H

17

g

h

s

Q_s

90°

40

41

b

15

Fig.4

11

c

2

Fig.6

EP 0 157 805 B1